# EUROPEAN PATENT SPECIFICATION

(11) **EP 2 953 144 B1**
(45) Date of publication and mention of the grant of the patent: **11.10.2017**
(21) Application number: 14745781.6
(22) Date of filing: 29.01.2014
(51) Int. Cl.: H01F 38/14, H01F 27/28, H01F 27/24, H02J 5/00, H01F 5/02, H01F 27/38

(54) **CONTACTLESS-POWER-TRANSFER-DEVICE COIL AND CONTACTLESS POWER-TRANSFER DEVICE**
SPULE FÜR EINE KONTAKTLOSE STROMÜBERTRAGUNGSVORRICHTUNG UND KONTAKTLOSE STROMÜBERTRAGUNGSVORRICHTUNG
BOBINE POUR DISPOSITIF DE TRANSMISSION ÉLECTRIQUE SANS CONTACT AINSI QUE DISPOSITIF DE TRANSMISSION ÉLECTRIQUE SANS CONTACT

(30) Priority: 30.01.2013 JP 2013015074
(43) Date of publication of application: 09.12.2015
(73) Proprietor: Panasonic Intellectual Property Management Co., Ltd., Osaka-shi, Osaka 540-6207 (JP)
(72) Inventor: FUJITA, Atsushi, Osaka-shi, Osaka 540-6207 (JP); SADAKATA, Hideki, Osaka-shi, Osaka 540-6207 (JP); OMORI, Yoshiharu, Osaka-shi, Osaka 540-6207 (JP); KURIHARA, Hiroaki, Osaka-shi, Osaka 540-6207 (JP); BESSYO, Daisuke, Osaka-shi, Osaka 540-6207 (JP)
(74) Representative: Grünecker Patent- und Rechtsanwälte PartG mbB
(86) International application number: PCT/JP2014/000440
(87) International publication number: WO 2014/119293

(56) References cited:
- EP-A1- 2 867 978
- WO-A1-2012/099170
- JP-A- 2000 182 869
- JP-A- 2000 182 869
- JP-A- 2011 050 127
- JP-A- 2011 129 747
- JP-A- 2014 011 332
- US-A1- 2010 077 599
- US-A1- 2011 204 845

## Description

### TECHNICAL FIELD

The present invention relates to coils for non-contact power transmission systems for use in, for example, charging electric propulsion vehicles such as electric vehicles and plug-in hybrid vehicles.

### BACKGROUND ART

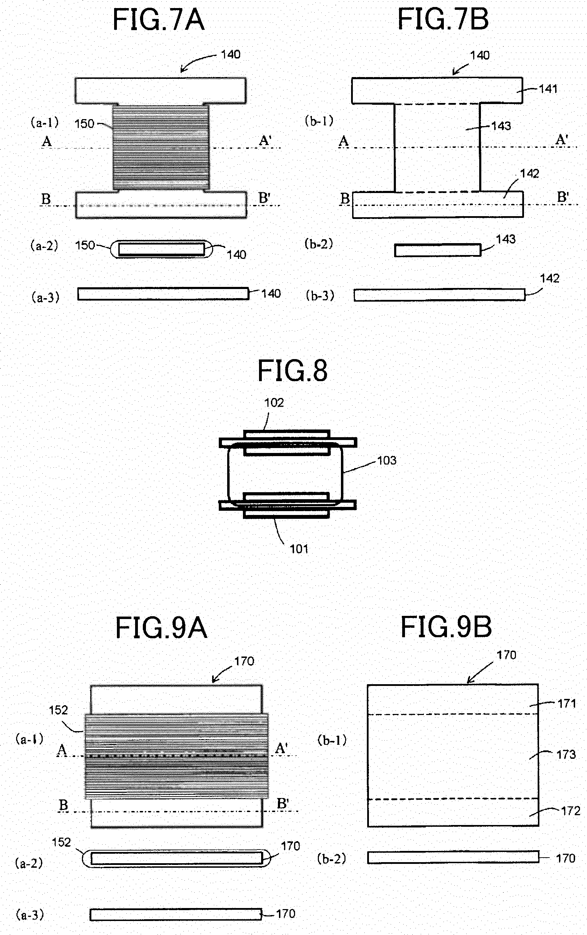

A non-contact power transmission system includes, for example, as shown in FIGS. 7A, 7B, and 8, a power supplier 101 including a coil 150 wound around an H-shaped core 140, and a power receiver 102. The power supplier 101 faces the power receiver 102 with an air gap interposed therebetween (see, e.g., PATENT DOCUMENT 1).

In place of the H-shaped core 140, a rectangular the core 170 may be used as shown in FIGS. 9A and 9B.

EP 2 867 978 A1 (falling with the meaning of Article 54(3) EPC) relates to a wireless energy transfer for a rechargeable battery. US 2010/077599 A1 relates to a method for manufacturing a stator coil and an apparatus for manufacturing a stator coil. JP 2000 182869 A relates to a circuit component with a core-containing coil and a method of manufacturing the same.

### CITATION LIST

### PATENT DOCUMENT

[PATENT DOCUMENT 1] Japanese Patent Publication No. 2011-50127

### SUMMARY OF THE INVENTION

### TECHNICAL PROBLEM

A coil used in a non-contact power transmission system used for, for example, charging an electric propulsion vehicle (e.g., a power receiving coil mounted on a vehicle, in particular) needs to have a reduced thickness to avoid contact with an interfering object (e.g., a car stop, a block) on a road surface. The height of a vehicle changes, for example, when a driver or passenger gets in and out of the vehicle, or a luggage is loaded and unloaded into/from the vehicle. If the power supplier accidentally contacts with the power receiver due to a change in the height of the vehicle, there is a risk that the power supplier or the power receiver could be damaged. In order to keep a certain air gap between the power supplier and the power receiver, the coil for the non-contact power transmission system also needs to have its thickness reduced.

However, in FIG. 7A, for example, when the coil 150 is wound around the H-shaped core 140 with a reduced thickness, a bending portion of the coil 150 has an increased curvature on a shorter side surface in a transverse cross-section of the core 140. In general, in a non-contact power transmission system, an RF current is supplied to the coil 150 to generate an RF magnetic field, thereby enabling high-efficiency power transmission. As the coil 150, very fine stranded wires (e.g., Litz wires), which are insulated from each other, are used to reduce heat generation caused by an increase in the resistance.

With an increase in curvature at the bending portion of the coil 150, the Litz wire could be broken or its insulating film could be damaged. As a result, heat generation due to an increase in the resistance of the coil 150 can no longer be reduced sufficiently, thus increasing the temperature of the coil 150, which may lead to malfunction of the non-contact power transmission system.

In view of the foregoing background, it is therefore an objective of the present invention to provide a coil with a reducible thickness for a non-contact power transmission system.

### SOLUTION TO THE PROBLEM

A coil for a non-contact power transmission system according to the present invention is used in a non-contact power transmission system to transmit electric power via a non-contact method. The coil is defined according to claim 1.

### ADVANTAGES OF THE INVENTION

According to the present invention, when the wire is wound around the magnetic body, the wire around the shorter side surface of the magnetic body in the transverse cross-section, which is an easily bendable portion, may be set to be equal to or greater than a predetermined length, thereby reducing bending of the wire. As a result, a coil with a reduced thickness is provided for a non-contact power transmission system without breaking the wire or damaging its insulating film.

### BRIEF DESCRIPTION OF THE DRAWINGS

[FIG. 1] FIGS. 1A-1C generally illustrate a coil for a non-contact power transmission system.
[FIG. 2] FIG. 2 is an enlarged cross-sectional view of a wire according to the present invention.
[FIG. 3] FIGS. 3A-3C generally illustrate winding states of a wire to be wound around the magnetic body.
[FIG. 4] FIGS. 4A-4C generally illustrate a coil for a non-contact power transmission system.
[FIG. 5] FIGS. 5A-5C generally illustrate a coil for a non-contact power transmission system.
[FIG. 6] FIGS. 6A-6C generally illustrate a coil for a non-contact power transmission system according to the present invention.
[FIG. 7] FIGS. 7A and 7B illustrate an H-shaped core of a coil of a conventional non-contact power supplier.
[FIG. 8] FIG. 8 illustrates a power supplier and a power receiver facing the power supplier in a conventional non-contact power supplier.
[FIG. 9] FIGS. 9A and 9B illustrate a rectangular core in a conventional non-contact power supplier.

### DESCRIPTION OF EMBODIMENTS

A coil for a non-contact power transmission system according to an embodiment of the present invention is a power transmitting coil or a power receiving coil used in a non-contact power transmission system to transmit electric power via a non-contact method. The coil includes a magnetic body with a flat cross section, and a wire wound around the magnetic body. The wire is wound around a shorter side surface of the magnetic body in transverse cross-section at a predetermined angle other than 90 degrees with respect to a longer side surface of the magnetic body in a longitudinal cross-section.

With this configuration, when a wire is wound around a magnetic body, the length of the wire at the shorter side surface of the magnetic body in the transverse cross-section, which is an easily bendable portion, may be set to be equal to or greater than a predetermined length, thereby reducing bending of the wire. As a result, a coil with a reduced thickness is provided for a non-contact power transmission system without breaking the wire or damaging its insulating film.

### Embodiments

The present invention will now be described with reference to the drawings. Note that the following description is not intended to limit the scope of the present invention.

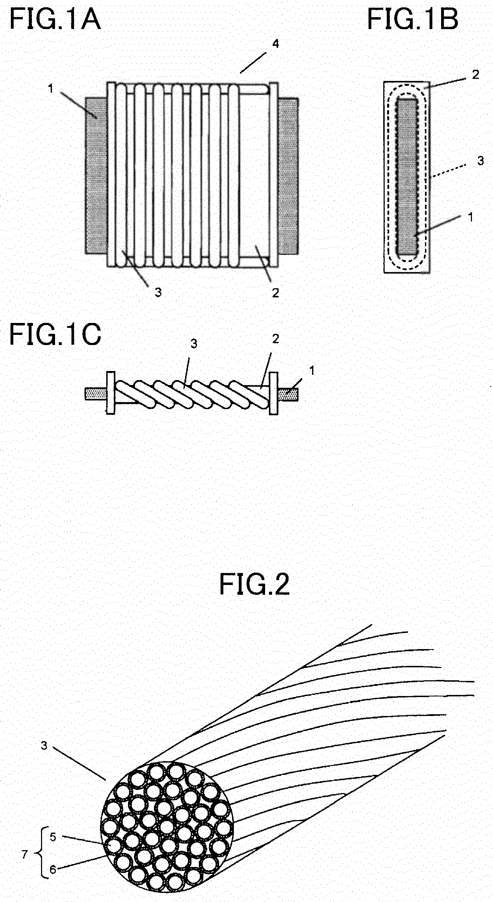

FIGS. 1A-1C generally illustrate a coil for a non-contact power transmission system. FIG. 1A is a top view. FIG. 1B is a side view as viewed along a winding axis of a coil. FIG. 1C is a side view as viewed in the direction perpendicular to the winding axis of the coil.

As shown in FIG. 1A, a bobbin 2 is disposed around a magnetic body 1. The magnetic body 1 is formed to have a flat cross section by arranging a plurality of ferrite elements. The bobbin 2 is made of an electrically insulating resin. A wire 3 is wound around the magnetic body 1 with the bobbin 2 interposed therebetween.

The magnetic body 1 and the wire 3 together function as an inductive coil 4. When a current flows through the wire 3, a magnetic flux is generated from the magnetic body 1 along the winding axis of the coil (i.e., in the lateral direction) in FIG. 1A. In the non-contact power transmission system, this coil 4 is provided as a power transmitting coil and a power receiving coil so that the coils face each other.

FIG. 2 is an enlarged cross-sectional view of the wire 3. A Litz wire formed by stranding a large number of element wires 7 is used as the wire 3. Each element wire 7 is comprised of a conductor 5 and an insulator 6. The conductor 5 is configured, for example, as a copper wire. The insulator 6 is, for example, an epoxy layer on the surface of the conductor 5. The Litz wire sufficiently reduces the resistance to be produced when an RF current flows through the wire and thereby reduce heat generation. An RF current is supplied from a power supply (not shown) to the wire 3 of the power transmitting coil. An RF magnetic field generated by the power transmitting coil is magnetically coupled to a power receiving coil 4, which faces the power transmitting coil, thereby enabling high-efficiency power transmission.

In general, when an RF current flows through the wire 3, the current may concentrate on the surface of the conductor 5 (i.e., skin effect). Or a current flowing between adjacent ones of the conductors 5 may generate such a magnetic field that causes non-uniform current distribution (i.e., proximity effect). However, the wire 3 implemented as a Litz wire mitigates such skin effect and proximity effects, thereby reducing an increase in the resistance.

However, the conductors 5 constituting such a Litz wire are extremely fine. The insulators 6 are also extremely thin layers. For these reasons, when the wire 3 is handled in a bent state, there is a risk that the conductors 5 could be broken or the insulators 6 could be damaged or peeled off to eventually cause an increase the resistance of the wire 3.

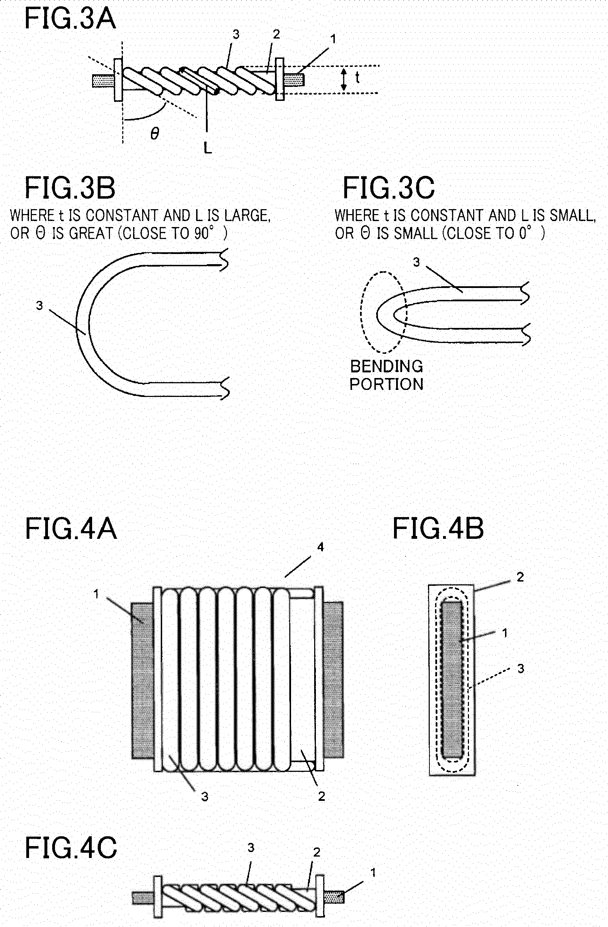

Similar to FIG. 1C, FIG. 3A is a side view as viewed in the direction perpendicular to the winding axis of the coil 4. L denotes the length of the wire 3 wound around the short side surface of the magnetic body 1. θ denotes an angle defined by the wire 3 with respect to the direction perpendicular to the longer side surface of the magnetic body 1. t denotes the winding thickness of the wire 3 (≈ the thickness of the bobbin 2). The magnetic body 1 has a substantially rectangular flat cross-section. The shorter side surface of the magnetic body 1 is one of the side surfaces parallel to the winding axis of the coil 4, and has a width defined by a shorter side of the cross-section of the magnetic body 1. The longer side surface of the magnetic body 1 has a width defined by a longer side of the cross-section of the magnetic body 1.

If the wire 3 is wound at a small angle θ, in other words, if the wire 3 is wound to approach the line perpendicular to the shorter side surface of the magnetic body 1, L decreases (≈ t), the bending radius of the wire 3 also decreases as shown in FIG. 3C to cause a bending portion. As a result, the conductors 5 could be broken or the insulators 6 could be damaged or peeled off.

In this embodiment, if the wire 3 is wound at a great angle θ, in other words, if the wire 3 is wound to increase L, the wire 3 comes to have a large bending radius as shown in FIG. 3B.

In this embodiment, being wound at a great angle θ and with an increased L with respect to t, the wire 3 may be wound to have a large bending radius. This allows for reducing breakage of the conductors 5 and damages and peeling of the insulators 6 and thereby maintaining high reliability.

The wire 3 implemented as a Litz wire reduces an increase in the resistance so much as to minimize heat generation at the coil 4. Consequently, high-efficiency power transmission is realized.

Since this coil for the non-contact power transmission system for use in, for example, charging an electric propulsion vehicle has a reducible thickness, contact with an interfering object (e.g., a car stop, a block) on a road surface is avoidable. Such a reduction in the thickness also minimizes damages of the power transmitting or receiving coil. This is because this coil does not contact with the power transmitting or receiving coil easily even if the height of a vehicle provided with the coil changes when a driver or passenger gets in or out of the vehicle or when a luggage is loaded or unloaded into/from the vehicle.

The allowable bending radius and bending tolerance range of the insulators 6 of the Litz wire vary depending on the thickness, material, heat resistance, or other factors, which also affects the specification of the wire 3. The winding angle θ of the wire 3 may be set in accordance with the specification of the wire 3 such that the wire 3 falls within the bending tolerance range not damaging the insulators 6. In this example, the winding angle θ of the wire 3 preferably falls within a range from 10 to 60 degrees, and more preferably falls within a range from 30 to 60 degrees.

In FIGS. 1A-1C, an example has been described where the wire 3 is wound with a substantially constant outside diameter, and with a gap interposed between turns of the wire 3. The configuration is however only an example and no way limiting. For example, as shown in FIGS. 4A-4C, if the wire 3 is wound while being deformed to be flat on longer side surfaces of the coil 4, in the height of the wire 3 is reduced, thereby further reducing the thickness of the coil 4.

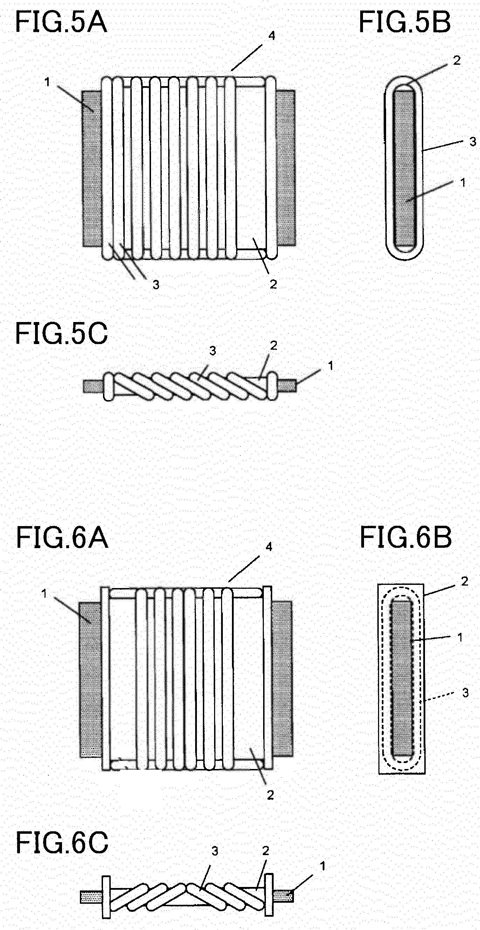

In FIGS. 1C and 3A, an example has been described where the wire 3 is wound at a constant winding angle θ on a shorter side surface of the coil 4. The configuration is however only an example and no way limiting. For example, as shown in FIGS. 5A-5C, at both ends of the bobbin 2, the wire 3 wound around the shorter side surface of the magnetic body 1 in the transverse cross section may be wound substantially perpendicularly to the longer side surface of the magnetic body 1 in the longitudinal cross-section. As a result, the ends of the wire 3 are more readily fixed to reduce deviation and deformation of the wire 3. The wire 3 may be wound only at one end. The winding angle of the wire 3 may be changed only where needed depending on the purpose such as reduction in deviation or shape retention of the wire 3.

Alternatively, as shown in FIGS. 6A-6C, the winding angle of the wire 3 may be changed on the way. When the coil 4 is used as a power transmitting or receiving coil for a non-contact power transmission system, an opening formed at each end of the wound wire 3 is oriented to the other coil that faces the former coil. Then, the magnetic field generated from the end of the wire 3 is more easily oriented toward the other coil, which thus improves transmission efficiency and reduces the leakage magnetic field.

The coil 4 according to this embodiment may be used as one or both of coils set on the ground and in a vehicle. The coil on the ground transmits electric power, while the coil on the vehicle receives the electric power. In particular, the coil on the vehicle is often desired to have a reduced thickness to avoid interference with a road surface. Therefore, the coil 4 of this embodiment may be used only as a coil on the vehicle side.

### INDUSTRIAL APPLICABILITY

The present invention is applicable for use as a power transmitting or receiving coil for a non-contact power transmission system at the time in, for example, charging an electric propulsion vehicle such as an electric vehicle and a plug-in hybrid vehicle.

### DESCRIPTION OF REFERENCE CHARACTERS

- 1: Magnetic Body
- 2: Bobbin
- 3: Wire
- 4: Coil

## Claims

1. A coil for use in a non-contact power transmission system to transmit electric power via a non-contact method, the coil comprising:
a magnetic body (1) with a flat cross section; and
a wire (3) wound around the magnetic body (1), wherein
the wire (3) is wound around a shorter side surface of the magnetic body (1) at a predetermined wiring angle (Θ) with respect to a direction perpendicular to a longer side surface of the magnetic body (1), the angle of the wire (3) wound from one end to a center of the magnetic body (1) is opposite to the angle of the wire (3) wound from the other end to the center of the magnetic body (1).

2. The coil for the non-contact power transmission system of claim 1, wherein
a surface of the wire (3) is covered with an insulator, and
on the short side surface of the magnetic body (1), the wire (3) is wound at an angle within a bending tolerance range in which the insulator is not damaged.

3. The coil for the non-contact power transmission system of claim 1, wherein
the wire (3) is wound at an angle of from 10 to 60 degrees with respect to the direction perpendicular to the longer side surface of the magnetic body (1).

4. A non-contact power transmission system comprising:
a power supplier including a power transmitting coil; and
a power receiver including a power receiving coil, wherein
the power transmitting coil and/or the power receiving coil are/is the coil for the non-contact power transmission system of any one of claims 1 to 3.

## Patentansprüche

1. Spule zum Einsatz in einem kontaktlosen Stromübertragungs-System zum Übertragen von elektrischem Strom mittels eines kontaktlosen Verfahrens, wobei die Spule umfasst:
einen magnetischen Körper (1) mit einem flachen Querschnitt; und
einen Draht (3), der um den magnetischen Körper (1) herum gewickelt ist, wobei
der Draht (3) um eine Fläche einer kürzeren Seite des magnetischen Körpers (1) herum in einem vorgegebenen Verlegungswinkel (Θ) in Bezug auf eine Richtung senkrecht zu einer Fläche einer längeren Seite des magnetischen Körpers (1) gewickelt ist, und
der Winkel des Drahtes (3), der von einem Ende zu einer Mitte des magnetischen Körpers (1) gewickelt ist, dem Winkel des Drahtes (3) entgegengesetzt ist, der von dem anderen Ende zu der Mitte des magnetischen Körpers (1) gewickelt ist.

2. Spule für das kontaktlose Stromübertragungs-System nach Anspruch 1, wobei
eine Oberfläche des Drahtes (3) mit einem Isolator bedeckt ist, und
an der Fläche der kurzen Seite des magnetischen Körpers (1) der Draht (3) in einem Winkel in einem Biegetoleranz-Bereich gewickelt ist, in dem der Isolator nicht beschädigt wird.

3. Spule für das kontaktlose Stromübertragungs-System nach Anspruch 1, wobei
der Draht (3) in einem Winkel von 10 bis 60° in Bezug auf die Richtung senkrecht zu der Fläche der längeren Seite des magnetischen Körpers (1) gewickelt ist.

4. Kontaktloses Stromübertragungs-System, das umfasst:
eine Strom-Zuführeinrichtung, die eine Strom-Sendespule enthält; und
eine Strom-Empfangseinrichtung, die eine Strom-Empfangsspule enthält, wobei
die Strom-Sendespule und/oder die Strom-Empfangsspule die Spule für das kontaktlose Stromübertragungs-System nach einem der Ansprüche 1 bis 3 sind/ist.

## Revendications

1. Bobine pour l'utilisation dans un système de transmission d'énergie sans contact pour transmettre de l'énergie électrique via un procédé sans contact, la bobine comprenant :
un corps magnétique (1) avec une section transversale plate ; et
un câble (3) enroulé autour du corps magnétique (1), où
le câble (3) est enroulé autour d'une surface latérale plus courte du corps magnétique (1) sous un angle de câblage prédéterminé (θ) par rapport à un sens perpendiculaire à une surface latérale plus longue du corps magnétique (1),
l'angle du câble (3) enroulé depuis une extrémité vers un centre du corps magnétique (1) opposé à l'angle du câble (3) enroulé depuis l'autre extrémité vers le centre du corps magnétique (1).

2. Bobine pour l'utilisation du système de transmission d'énergie sans contact selon la revendication 1, dans laquelle
une surface du câble (3) est recouverte d'un isolant, et
sur la surface latérale courte du corps magnétique (1), le câble (3) est enroulé sous un angle à l'intérieur d'une plage de tolérance de flexion dans laquelle l'isolant n'est pas endommagé.

3. Bobine pour l'utilisation du système de transmission d'énergie sans contact selon la revendication 1, dans laquelle
le câble (3) est enroulé sous un angle de 10 à 60 degrés par rapport au sens perpendiculaire à la surface latérale la plus longue du corps magnétique (1).

4. Système de transmission d'énergie sans contact comprenant :
un dispositif d'alimentation d'énergie comprenant une bobine de transmission d'énergie ; et
un dispositif de réception d'énergie comprenant une bobine de réception d'énergie, où
la bobine de transmission d'énergie et/ou la bobine de réception d'énergie sont/est la bobine destinée au système de transmission d'énergie sans contact selon l'une quelconque des revendications 1 à 3.
